# FASCICULE DE BREVET EUROPEEN

(11) **EP 1 321 080 B1**
(45) Date de publication et mention de la délivrance du brevet: **03.11.2004**
(21) Numéro de dépôt: 02356266.3
(22) Date de dépôt: 18.12.2002
(51) Int. Cl.: A47J 27/08

(54) **Couvercle pour appareil de cuisson sous pression à mâchoires allégées et appareil de cuisson comportant un tel couvercle**
Dampfdruckkochtopfdeckel mit verkleinerten Klauen und Dampfdruckkochtopf mit einem solchen Deckel
Cover for a pressure cooker with reduced jaws and pressure cooker with such a cover

(30) Priorité: 19.12.2001 FR 0116902
(43) Date de publication de la demande: 25.06.2003
(73) Titulaire: Seb S.A., 69132 Ecully Cedex (FR)
(72) Inventeur: Cartigny, Michel Pierre, 21310 Mirebeau sur Beze (FR); Piguet, Yvan Marcel Georges, 52190 Cusey (FR); Rhetat, Eric Christian Jacques, 21000 Dijon (FR)
(74) Mandataire: Martin, Didier Roland Valéry

(56) Documents cités:
- EP-A- 0 691 096
- EP-A- 0 691 097
- FR-A- 1 142 648
- US-A- 5 370 259
- US-A- 6 116 151

## Description

La présente invention se rapporte au domaine technique des appareils de cuisson sous pression, du genre autocuiseurs, avec un couvercle destiné à être rapporté et verrouillé sur une cuve de cuisson, ledit couvercle comportant au moins une mâchoire montée mobile radialement entre une position de verrouillage et une position de déverrouillage sur le couvercle.

La présente invention concerne un couvercle pour appareil de cuisson sous pression destiné à être rapporté et verrouillé sur une cuve de cuisson, ledit couvercle comportant au moins une mâchoire montée mobile radialement entre une position de verrouillage et une position de déverrouillage, ladite au moins une mâchoire présentant une section sensiblement en U, avec une face supérieure de portée sur le couvercle, une face frontale et une face inférieure repliée destinée à venir en contact avec et sous le bord de cuve en position de verrouillage.

La présente invention concerne également un appareil de cuisson sous pression, du genre autocuiseur, équipé d'un couvercle avec au moins une mâchoire de verrouillage montée mobile radialement sur ledit couvercle sous l'action d'un organe de commande.

On connaît déjà les appareils de cuisson sous pression destinés à la cuisson sous pression des aliments, du genre autocuiseurs, comportant un couvercle sur lequel deux mâchoires sont montées mobiles radialement en position opposée, ledit couvercle étant destiné à être positionné ou rapporté sur la cuve de cuisson de l'autocuiseur, puis verrouillé à l'aide d'un dispositif de commande du déplacement radial des mâchoires positionnées sur le couvercle. Un tel dispositif est par exemple décrit dans les demandes de brevets EP-0 691 096 et EP-0 691 097 au nom du même demandeur.

Ces dispositifs connus mettent en oeuvre au moins deux mâchoires de verrouillage solidaires de bras entraîneurs, disposées par exemple radialement sur le couvercle, dont le déplacement est commandé par un organe central de commande sur le couvercle, du genre bouton, pommeau ou autres, que l'utilisateur actionne pour assurer le déplacement radial des mâchoires, soit en direction centrifuge, soit en direction centripète, pour positionner les mâchoires respectivement en position de déverrouillage ou en position de verrouillage.

Les mâchoires se présentent dans ces dispositifs connus sous la forme de pièces de rayon de courbure adapté au diamètre de la cuve de cuisson de l'appareil et d'une longueur définie (par exemple un quart de la circonférence de la cuve), et de section transversale sensiblement en U avec une face supérieure de portée sur le couvercle, une face frontale et une face inférieure repliée destinée à venir en contact avec et sous le bord de cuve en position de verrouillage.

Les systèmes connus donnent pleine satisfaction et s'avèrent d'une manipulation aisée de la part de l'utilisateur, en particulier pour l'atteinte des positions de verrouillage et de déverrouillage, tout en étant robustes et particulièrement sûrs en matière de sécurité à la surpression.

En revanche, il s'avère que les mâchoires du type mentionné précédemment, si elles présentent une bonne robustesse, souffrent d'un inconvénient important lié à la particularité et à la difficulté de leur fabrication.

En effet, ces mâchoires sont réalisées par emboutissage de pièces métalliques, et l'obtention de cotes précises des différentes faces de la section en U des mâchoires, ainsi que le respect d'un bon esthétisme des pièces, s'agissant de pièces directement visibles de l'extérieur de l'appareil de cuisson, nécessitent de nombreuses étapes de reprises industrielles. En particulier, les opérations d'emboutissage créent des zones d'épaississement du matériau métallique, ainsi que des zones à l'aspect esthétique détérioré (rayures, chocs, zones martelées, etc.), qu'il convient précisément de reprendre lors d'étapes ultérieures de finissage manuel tel que par polissage.

Ces opérations additionnelles de finissage contribuent à générer un coût industriel supplémentaire des mâchoires produites, ce qui constitue un inconvénient.non négligeable.

Par ailleurs, il s'avère que la robustesse de ces mâchoires est obtenue notamment par l'utilisation de mâchoires d'épaisseur et de dimensionnement conséquents, impliquant une utilisation. correspondante de matière, ce qui contribue à augmenter le coût économique des mâchoires produites.

Les objets assignés à l'invention visent en conséquence à porter remède aux différents inconvénients énumérés précédemment et à proposer un nouveau couvercle pour appareil de cuisson sous pression équipé de mâchoires de verrouillage / déverrouillage montées mobiles radialement sur le couvercle, ledit couvercle et lesdites mâchoires étant particulièrement faciles et économiques à fabriquer, tout en étant d'une résistance mécanique améliorée.

Un autre objet de l'invention vise à proposer un nouveau couvercle pour appareil de cuisson sous pression, qui soit à même de contrôler et maîtriser, de manière optimale, les déformations éventuellement subies par le couvercle en cas de surpression accidentelle dans l'appareil.

Un autre objet de l'invention vise à proposer un nouveau couvercle pour appareil sous pression dont les mâchoires sont particulièrement adaptées à être fabriquées par des opérations de pliage, sans pour autant affecter la rigidité d'ensemble de la mâchoire.

Un autre objet de l'invention vise à proposer un nouveau couvercle pour appareil de cuisson sous pression dont les mâchoires sont conformées pour assurer une résistance optimale à la déformation en cas de surpression accidentelle.

Un autre objet de l'invention vise à proposer un nouveau couvercle pour appareil de cuisson sous pression qui soit particulièrement léger, tout en étant résistant.

Les objets assignés à l'invention sont atteints à l'aide d'un couvercle pour appareil de cuisson sous pression destiné à être rapporté et verrouillé sur une cuve de cuisson, ledit couvercle comportant au moins une mâchoire montée mobile radialement entre une position de verrouillage et une position de déverrouillage, ladite au moins une mâchoire présentant une section sensiblement en U avec une face supérieure de portée sur le couvercle, une face frontale et une face inférieure repliée destinée à venir en contact avec et sous le bord de cuve en position de verrouillage, caractérisé en ce que ladite au moins une mâchoire comporte un dégagement sensiblement central s'étendant dans les faces frontale et inférieure pour définir deux ailes de verrouillage.

D'autres particularités et avantages de l'invention seront mieux compris à la lumière de la description qui suit et des dessins annexés, donnés à titre purement illustratif et non limitatif, dans lesquels :
- La figure 1 représente, selon une vue de face, un autocuiseur conforme à l'invention équipé d'un couvercle pourvu de mâchoires de verrouillage conformes à l'invention.
- La figure 2 illustre, selon une vue partielle en perspective, un détail de montage de mâchoires conformes à l'invention sur un couvercle conforme à l'invention.
- La figure 3 illustre, selon une vue en perspective, une mâchoire de verrouillage conforme à l'invention destinée à être montée sur un couvercle conforme à l'invention.
- La figure 4 illustre, selon une vue de face, un détail de réalisation d'une mâchoire de verrouillage conforme à l'invention.
- La figure 5 illustre, selon une vue en coupe transversale partielle, un autocuiseur conforme à l'invention équipé d'un couvercle conforme à l'invention exposition de verrouillage.

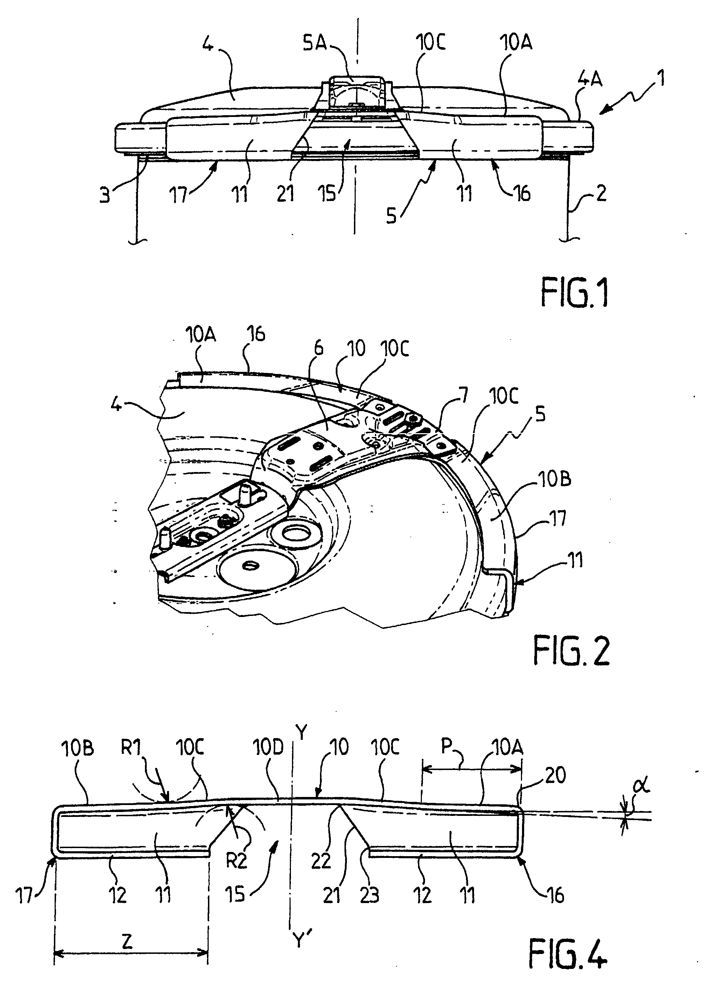

Les figures 1 à 5 représentent un appareil de cuisson sous pression conforme à l'invention, tel qu'un autocuiseur, du type autocuiseur à mâchoires destiné à assurer la cuisson d'aliments sous pression de vapeur. De manière classique, l'autocuiseur 1 illustré à la figure 1 comprend une cuve 2 métallique de section circulaire ou ovale par exemple, se terminant à sa partie supérieure par un bord roulé 3 et replié (figure 5). L'autocuiseur 1 comprend également un couvercle 4 destiné à être rapporté et positionné sur la cuve 2 de cuisson de manière étanche, de manière à créer une enceinte hermétique au sein de laquelle on peut obtenir, par apport de chaleur, une pression de fonctionnement supérieure à la pression atmosphérique.

L'autocuiseur conforme à l'invention sera pourvu des éléments d'étanchéité nécessaires à la montée en pression, tel qu'un joint annulaire (non représenté aux figures), et de tous les dispositifs de sécurité à la surpression nécessaires (non représentés aux figures), du genre soupapes ou systèmes de fluage du joint, pour éviter le dépassement accidentel de la pression normale de fonctionnement. De tels éléments et dispositifs étant bien connus de l'homme du métier et ne faisant pas partie de l'invention, ils ne seront en conséquence pas décrits ci-après plus en détails.

Tel qu'illustré en particulier aux figures 1 et 2, le couvercle 4 comporte au moins une mâchoire 5 montée mobile radialement en considération de l'axe de symétrie principal de l'autocuiseur 1 illustré à la figure 1, entre une position de verrouillage illustrée à la figure 5 et une position de déverrouillage illustrée en traits pointillés également à la figure 5. Le déplacement axial de la ou des mâchoire(s) 5 est assuré à l'aide d'un système de commande 5A comprenant un bras entraîneur 6 solidaire par une extrémité 7 de la mâchoire 5 qui lui est associée, et par une autre extrémité (non représentée aux figures) d'un organe de commande, du genre bouton, pommeau, poignée, ou autres, destiné à être actionné par l'utilisateur pour assurer l'extension ou la rétraction radiale des mâchoires correspondant respectivement aux positions de déverrouillage et de verrouillage. De tels dispositifs sont également bien connus de l'homme du métier et ne seront pas décrits plus en détails.

Tel que visible aux figures 1 à 4, la mâchoire 5 est courbe et sa courbure est adaptée et conjuguée à la courbure du couvercle 4 et de la cuve 2, de manière à assurer un verrouillage correct du couvercle sur la cuve. La mâchoire 5 s'étend sur une longueur périphérique définie et propre à chaque autocuiseur en fonction de sa taille, et par exemple sur une longueur périphérique correspondant à un tiers, un quart ou un cinquième de sa circonférence.

La mâchoire 5 présente une section transversale sensiblement en U définissant une face supérieure de portée 10 sur le couvercle 4, et en particulier sur la surface annulaire externe 4A, une face frontale 11 formant l'âme du U et une face inférieure repliée 12 destinée à venir en contact et à porter avec et sous le bord plié 3 de cuve en position de verrouillage (figure 5).

Selon une caractéristique importante de l'invention, la mâchoire conforme à l'invention comporte un dégagement ou évidement sensiblement central 15, en considération de l'axe de symétrie Y, Y' de la mâchoire 5, s'étendant dans la face frontale 11 et inférieure 12 pour définir deux ailes de verrouillage 16, 17 situées de part et d'autre du dégagement 15, et symétrique entre elles. Grâce à cette disposition, on obtient ainsi une mâchoire 5 comportant deux ailes de verrouillage 16, 17 assurant la portée sur le bord replié 3 de cuve dans les zones latérales et extrêmes de la mâchoire 5. Cette configuration permet d'obtenir un gain de matière dans la partie centrale de la mâchoire 5 grâce au dégagement 15, ce qui est une source non négligeable d'économie de matière, tout en conservant une bonne robustesse et une bonne résistance de la mâchoire à la déformation. Par ailleurs, cette disposition permet d'avoir recours à la technique de conformation par pliage de la mâchoire, ce qui évite d'avoir recours à la technique d'emboutissage. Les opérations de finissage sont donc fortement réduites, voire inexistantes, les sollicitations et dégradations mécaniques de la matière lors du pliage étant fortement réduites, ce qui permet d'éviter d'avoir recours à des opérations ultérieures éventuelles de polissage et finissage spécifiques.

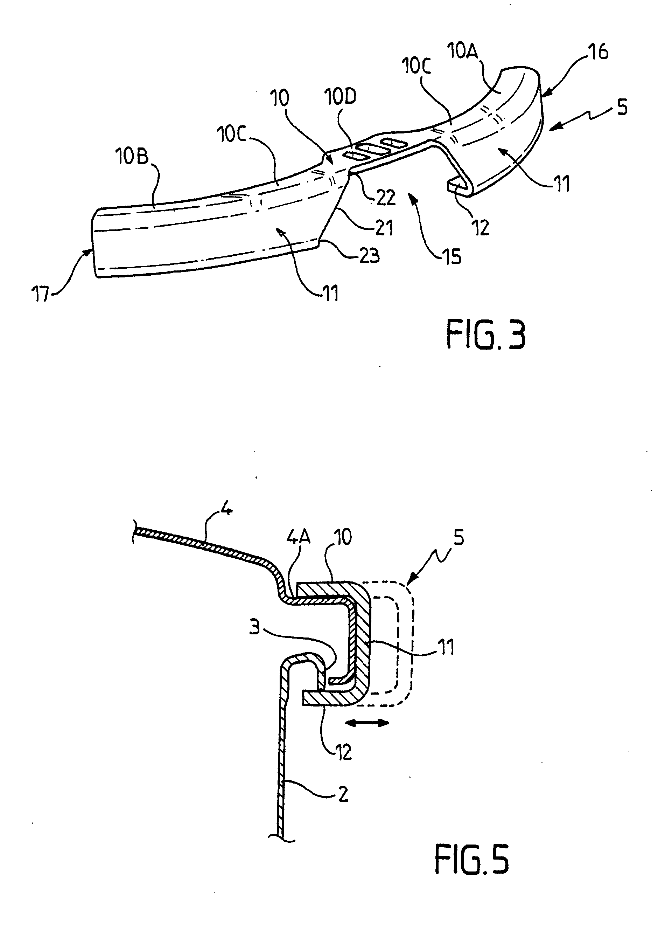

Tel qu'illustré plus particulièrement aux figures 3 et 4, la face supérieure de portée 10 comprend ou est formée par deux faces supérieures latérales 10A, 10B situées respectivement au niveau des ailes de verrouillage 16, 17, chacune desdites faces supérieures latérales 10A, 10B se raccordant, par une face de raccordement associée à chacune d'elles 10C, à une face supérieure centrale 10D située au niveau du dégagement central 15, ladite face supérieure centrale 10D étant surélevée par rapport aux deux faces supérieures latérales 10A, 10B.

Grâce à la présence d'une zone surélevée centrale par rapport aux faces supérieures latérales 10B et aux faces de raccordement 10C associées, et ce au niveau et à l'aplomb du dégagement ou de l'évidement central 15, on obtient un équilibre de la déformation du couvercle à l'intérieur de la mâchoire elle-même en cas de déformation de l'ensemble due à une montée en pression accidentelle et incontrôlée. On réussit ainsi par cette disposition à équilibrer, de manière optimale, les déformations accidentelles de l'autocuiseur en cas de défaillance des dispositifs de sécurité de l'autocuiseur.

Avantageusement, les faces de raccordement 10C se raccordent, tel qu'illustré, progressivement d'une part aux faces supérieures latérales 10A et 10B, et d'autre part à la face supérieure centrale 10D.

Avantageusement, tel qu'illustré à la figure 4 par exemple, le raccordement progressif des faces de raccordement 10C est réalisé par deux rayons de raccordement opposés de valeurs R1 et R2 comprises entre environ 10 et 40 mm, et respectivement avec les faces supérieures latérales 10A, 10B et avec la face supérieure centrale 10D. Ceci contribue à augmenter la continuité de la rigidité dans la zone supérieure de la mâchoire 5, tout en favorisant grandement l'opération de pliage, pour former les faces frontales 11 ainsi que la face inférieure repliée 12. Avantageusement, R1 et R2 seront respectivement égaux à 27 et 20 mm.

Tel qu'illustré à la figure 4 notamment, les faces supérieures latérales 10A, 10B présentent une inclinaison angulaire α par rapport à l'horizontale ou la surface plane du bord replié 3, ladite valeur angulaire α étant orientée de telle façon que les parties extérieures 20 desdites faces, en considération de l'axe de symétrie Y, Y' de la mâchoire, portent sur le couvercle 4. Grâce à cette inclinaison de chaque face supérieure latérale 10A, 10B, on définit une zone inclinée P (figure 4) ne portant dans sa position de repos que par sa partie extérieure 20 sur la surface annulaire 4A couvercle. En cas de déformation, on maîtrise ainsi au mieux les déformations possibles relatives du couvercle 4 et de la mâchoire 5, puisque les zones des points de portée 20 entre les mâchoires et le couvercle sont reportées dans les parties latérales extérieures des mâchoires.

Avantageusement, l'inclinaison angulaire α des faces supérieures latérales 10A, 10B sera comprise entre 0,5 et 1,5°. De manière particulièrement préférentielle, les faces supérieures latérales 10A, 10B seront sensiblement planes.

Selon l'invention, chacune des deux ailes de verrouillage 16, 17 comporte une face inférieure repliée 12 sensiblement plane dans son extension circonférencielle, de manière à définir une zone de portée allongée Z s'étendant sur sensiblement toute l'extension des faces inférieures repliées 12. Les faces inférieures repliées 12 étant préférentiellement parallèles au bord plié 3 de cuve, on obtient une bonne répartition de la portée et on évite ainsi toutes déformations localisées.

En combinaison avec la caractéristique relative à l'inclinaison angulaire α, la zone de portée allongée Z entre la cuve 2 et les faces inférieures repliées 12 permet de maîtriser, de manière optimale, les déformées du couvercle 4, en autorisant une déformation localisée du couvercle 4 dans sa zone située au droit de l'évidement 15 et dans ses parties adjacentes où un jeu est présent. Ceci est rendu possible grâce à la combinaison pour chaque mâchoire 5 de deux points d'appuis ponctuels 20 extérieurs contre le couvercle 4 et de deux zones de portée allongées Z également extérieures contre le bord 3 de cuve 2. Cette configuration géométrique des portées permet de maîtriser et contraindre, de manière optimale et sûre, la déformation du couvercle au niveau de l'évidement 15. Ceci a donc pour conséquence également de réduire les déformations dans les secteurs hors des mâchoires 5. Avantageusement, lorsque le couvercle 4 est circulaire, chaque mâchoire 5 courbe définit un arc suffisamment long pour définir un angle au centre correspondant égal ou supérieur à 90°.

Tel qu'illustré aux figures 1, 3 et 4, la face frontale 11 reliant la face inférieure 12 des ailes 16, 17, la face supérieure centrale 10D se termine vers le dégagement 15 par un bord incliné 21. Avantageusement, le bord incliné 21 est orienté de telle façon que son extrémité supérieure 22 est plus proche de l'axe de symétrie Y, Y' de la mâchoire 5 que son extrémité inférieure 23.

Avantageusement, chacune des deux ailes de verrouillage 16, 17, comporte une face frontale 11 qui se raccorde par le bord incliné 21 entre R1 et R2, ou de préférence après le rayon de raccordement R2 avec la face supérieure centrale 10D, c'est-à-dire au niveau de ladite face supérieure centrale 10D. Ceci permet de résister au mieux et de maîtriser également au mieux l'éventuelle déformation de la mâchoire 5 en évitant les déformations éventuelles au niveau du rayon de raccordement R1 et en évitant d'éventuelles amorces de pliage.

L'autocuiseur 1 conforme à l'invention décrit précédemment peut comporter une seule mâchoire 5 associée à un autre dispositif de fixation du couvercle sur la cuve, par exemple par rotation.

Néanmoins, de manière préférentielle, le couvercle conforme à l'invention sera équipé de deux mâchoires 5 opposées radialement sur le couvercle 4, étant entendu qu'au sens de l'invention, un couvercle conforme à l'invention pourrait comporter deux, voire quatre, voire un nombre supérieur de mâchoires 5 sans pour autant sortir du cadre de l'invention.

L'invention vise également à protéger tout appareil de cuisson sous pression, du type autocuiseur, équipé d'un couvercle présentant au moins une mâchoire 5 telle que décrite précédemment.

Les caractéristiques techniques propres des mâchoires, ainsi que leur coopération avec le couvercle et la cuve, permettent de simplifier leur fabrication tout en obtenant *in fine* un couvercle facilement manipulable et léger, et un autocuiseur dont la sécurité de fonctionnement, en cas de montée en pression accidentelle, est améliorée, les déformations éventuelles étant limitées et maîtrisées.

## Revendications

1. Couvercle (4) pour appareil de cuisson (1) sous pression destiné à être rapporté et verrouillé sur une cuve (2) de cuisson, ledit couvercle (4) comportant au moins une mâchoire (5) montée mobile radialement entre une position de verrouillage et une position de déverrouillage, ladite au moins une mâchoire (5) présentant une section sensiblement en U avec une face supérieure de portée (10) sur le couvercle (4), une face frontale (11) et une face inférieure repliée (12) destinée à venir en contact avec et sous le bord (3) de cuve (2) en position de verrouillage, **caractérisé en ce que** ladite au moins une mâchoire (5) comporte un dégagement (15) sensiblement central s'étendant dans les faces frontale (11) et inférieure (12) pour définir deux ailes de verrouillage (16, 17).

2. Couvercle selon la revendication 1 **caractérisé en ce que** la face supérieure de portée (10) comprend deux faces supérieures latérales (10A, 10B) situées au niveau des ailes de verrouillage (16, 17), chacune desdites faces supérieures latérales (10A, 10B) se raccordant par une face de raccordement associée (10C) à une face supérieure centrale (10D) située au niveau du dégagement central (15), ladite face supérieure centrale (10D) étant surélevée par rapport aux deux faces supérieures latérales (10A, 10B).

3. Couvercle selon la revendication 2 **caractérisé en ce que** les faces de raccordement (10C) se raccordent progressivement, d'une part aux faces supérieures latérales (10A, 10B), et d'autre part à la face supérieure centrale (10D).

4. Couvercle selon la revendication 3 **caractérisé en ce que** le raccordement progressif des faces de raccordement (10C) est réalisé par deux rayons de raccordement opposés, de valeurs R1 et R2 comprises entre 10 et 40 mm, respectivement avec les faces supérieures latérales (1 OA, 10B), et avec la face supérieure centrale (10D).

5. Couvercle selon l'une des revendications 2 à 4 **caractérisé en ce que** les faces supérieures latérales (10A, 10B) présentent une inclinaison α par rapport à l'horizontale, orientée de telle façon que les parties extérieures (20) desdites faces, en considération de l'axe de symétrie (Y, Y') de la mâchoire (5), portent sur le couvercle (4).

6. Couvercle selon la revendication 5 **caractérisé en ce que** l'inclinaison α des faces supérieures latérales (10A, 10B) est comprise entre 0,5 et 1,5°.

7. Couvercle selon l'une des revendications 1 à 6 **caractérisé en ce que** chacune des deux ailes de verrouillage (16, 17) comporte une face inférieure (12) repliée et sensiblement plane.

8. Couvercle selon l'une des revendications 1 à 7 **caractérisé en ce que** la face frontale (11) reliant la face inférieure (12) des ailes (16, 17) à la face supérieure centrale (10D) se termine vers le dégagement (15) par un bord incliné (21) dont l'extrémité supérieure (22) est plus proche de l'axe de symétrie (Y, Y') de la mâchoire (5) que son extrémité inférieure (23).

9. Couvercle selon les revendications 4 et 8 **caractérisé en ce que** chacune des deux ailes de verrouillage (16, 17) comporte une face frontale (11) qui se raccorde entre R1 et R2 ou après le rayon de raccordement R2 avec la face supérieure centrale (10D), c'est-à-dire au niveau de cette dernière.

10. Couvercle selon l'une des revendications 1 à 9 **caractérisé en ce qu'**il comporte deux mâchoires (5) opposées radialement.

11. Couvercle selon l'une des revendications 1 à 10 **caractérisé en ce que** le couvercle (4) est circulaire et chaque mâchoire (5) définit un arc de cercle délimitant un angle au centre égal ou supérieur à 90°.

12. Appareil de cuisson sous pression, du type autocuiseur, équipé d'un couvercle selon l'une des revendications 1 à 11.

## Patentansprüche

1. Deckel (4) für ein Druckkochgerät (1), der vorgesehen ist, auf einen Kochtopf (2) aufgebracht und verriegelt zu werden, wobei der genannte Deckel (4) mindestens eine Klemmbacke (5) beinhaltet, welche radial beweglich zwischen einer Verriegelungsposition und einer Entriegelungsposition angeordnet ist, wobei die genannte mindestens eine Klemmbacke (5) eine im wesentlichen U-förmige Sektion mit einer oberen Auflageseite (10) zur Auflage auf dem Deckel (4), einer Stirnseite (11) und einer umgefalzten Unterseite (12) aufweist, die vorgesehen ist, in der Verriegelungsposition in Kontakt mit und unter den Rand (3) des Topfes (2) zu kommen,
**dadurch gekennzeichnet, daß**
die mindestens eine Klemmbacke (5) eine im wesentlichen zentrale Aussparung (15) beinhaltet, die sich in der Stirnseite (11) und Unterseite (12) erstreckt, um zwei Verriegelungsflügel (16, 17) zu definieren.

2. Deckel nach Anspruch 1,
**dadurch gekennzeichnet, daß**
die obere Auflageseite ( 10 ) zwei laterale Oberseiten (10A, 10B) umfaßt, die im Bereich der Verriegelungsflügel liegen (16, 17), wobei jede der genannten lateralen Oberseiten (10A, 10B) über eine zugehörige Verbindungsseite (10C) mit einer zentralen Oberseite (10D) verbunden ist, die im Bereich der zentralen Ausnehmung (15) liegt, wobei die zentrale Oberfläche (10D) im Vergleich zu den beiden lateralen Oberseiten (10A, 10B) erhöht ist.

3. Deckel nach Anspruch 2,
**dadurch gekennzeichnet, daß**
sich die Verbindungsseiten (10C) einerseits an die seitlichen Oberseiten (10A, 10B) und andererseits an die zentrale Oberseite (10D) zunehmend angleichen.

4. Deckel dem Anspruch 3,
**dadurch gekennzeichnet, daß**
die zunehmende Angleichung der Verbindungsseiten (10C) jeweils zu den lateralen Oberseiten (10A, 10B) und zu der zentralen Oberseite (10D) durch zwei gegenläufige Krümmungsradien mit Werten R1 und R2 zwischen 10 und 40 mm, realisiert wird.

5. Deckel nach einem der Ansprüche 2 bis 4,
**dadurch gekennzeichnet, daß**
die lateralen Oberseiten (10A, 10B) eine Neigung α im Vergleich zur Horizontalen aufweisen, die derart ausgerichtet ist, daß die in Bezug auf die Symmetrieachse (Y, Y') der Klemmbacke (5) äußeren Bereiche (20) der genannten Oberseiten auf dem Deckel (4) aufliegen.

6. Deckel nach Anspruch 5,
**dadurch gekennzeichnet, daß**
die Neigung α der seitlichen Oberseiten (10A, 10B) zwischen 0,5 und 1,5 ° umfaßt.

7. Deckel nach einem der Ansprüche 1 bis 6,
**dadurch gekennzeichnet, daß**
jeder der beiden Verriegelungsflügel (16, 17) eine umgefalzte und im wesentlichen ebene Unterseite (12) umfaßt.

8. Deckel nach einem der Ansprüche 1 bis 7,
**dadurch gekennzeichnet, daß**
die Stirnseite (11), welche die Unterseite (12) der Flügel (16, 17) mit der zentralen Oberseite verbindet (10D), zur Ausnehmung (15) hin in einem geneigten Rand (21) endet, dessen oberes Ende (22) der Symmetrieachse (Y, Y') der Klemmbacke ( 5 ) näher ist als sein unteres Ende ( 23 ).

9. Deckel nach den Ansprüchen 4 und 8,
**dadurch gekennzeichnet, daß**
jeder der beiden Verriegelungsflügeln (16, 17) eine Stirnseite (11) umfaßt, die sich zwischen R1 und R2 oder nach dem Krümmungsradius R2 an die zentrale
Oberseite (10D) angleicht, das heißt auf die Höhe dieser Letzteren.

10. Deckel nach einem der Ansprüche 1 bis 9,
**dadurch gekennzeichnet, daß**
er zwei radial gegenüberliegende Klemmbacken (5) umfasst.

11. Deckel nach einer der Ansprüche 1 bis 10,
**dadurch gekennzeichnet, daß**
der Deckel (4) kreisförmig ist und jede Klemmbacke ( 5 ) einen Kreisbogen definiert, der einen Mittelpunktswinkel gleich oder größer 90° begrenzt.

12. Druckkochgerät des Typs Schnellkochtopf, das mit einem Deckel nach einem der Ansprüche 1 bis 11 ausgerüstet ist.

## Claims

1. Lid (4) for a pressurised cooking apparatus (1) intended to be attached and locked onto a cooking vessel (2), the said lid (4) comprising at least one jaw (5) mounted so as to be able to move radially between a locking position and an unlocking position, the said at least one jaw (5) having a substantially U-shaped cross-section with a top bearing face (10) on the lid (4), a front face (11) and a folded bottom face (12) intended to come into contact with and under the edge (3) of the vessel (2) in the locking position, **characterised in that** the said at least one jaw (5) comprises a substantially central recess (15) extending in the front (11) and bottom (12) faces in order to define two locking flanges (16, 17).

2. Lid according to Claim 1, **characterised in that** the top bearing face (10) comprises two lateral top faces (10A, 10B) situated level with the locking flanges (16, 17), each of the said lateral top faces (10A, 10B) being connected by an associated connecting face (10C) to a central top face (10D) situated level with the central recess (15), the said central top face (10D) being raised with respect to the two lateral top faces (10A, 10B).

3. Lid according to Claim 2, **characterised in that** the connecting faces (10C) are connected progressively on the one hand to the lateral top faces (10A, 10B) and on the other hand to the central top face (10D).

4. Lid according to Claim 3, **characterised in that** the progressive connecting of the connecting faces (10C) is effected by means of two opposite connecting radii, with values R1 and R2 lying between 10 and 40 mm, respectively with the lateral top faces (10A, 10B) and with the central top face (10D).

5. Lid according to one of Claims 2 to 4, **characterised in that** the lateral top faces (10A, 10B) have an inclination α with respect to the horizontal, oriented so that the external parts (20) of the said faces, considering the axis of symmetry (Y, Y') of the jaw (5), bear on the lid (4).

6. Lid according to Claim 5, **characterised in that** the inclination α of the lateral top faces (10A, 10B) is between 0.5° and 1.5°.

7. Lid according to one of Claims 1 to 6, **characterised in that** each of the two locking flanges (16, 17) comprises a folded and substantially planar bottom face (12).

8. Lid according to one of Claims 1 to 7, **characterised in that** the front face (11) connecting the bottom face (12) of the flanges (16, 17) to the central top face (10D) terminates towards the recess (15) in an inclined edge (21) whose top end (22) is closer to the axis of symmetry (Y, Y') of the jaw (5) than its bottom end (23).

9. Lid according to Claims 4 and 8, **characterised in that** each of the two locking flanges (16, 17) comprises a front face (11) which is connected between R1 and R2 or after the radius R2 of the connection with the central top face (10D), that is to say level with the latter.

10. Lid according to one of Claims 1 to 9, **characterised in that** it comprises two radially opposite jaws (5).

11. Lid according to one of Claims 1 to 10, **characterised in that** the lid (4) is circular and each jaw (5) defines an arc of a circle delimiting an angle at the centre equal to or greater than 90°.

12. Pressurised cooking apparatus, of the pressure cooker type, equipped with a lid according to one of Claims 1 to 11.
